# EUROPEAN PATENT SPECIFICATION

(11) **EP 4 228 200 B1**
(45) Date of publication and mention of the grant of the patent: **02.12.2026**
(21) Application number: 20956720.5
(22) Date of filing: 07.10.2020
(51) Int. Cl.: H04L 9/32, G06F 21/64

(54) **IDENTIFIER CHANGE MANAGEMENT DEVICE, IDENTIFIER CHANGE MANAGEMENT METHOD AND IDENTIFIER CHANGE MANAGEMENT PROGRAM**
VORRICHTUNG ZUR VERWALTUNG VON IDENTIFIKATORÄNDERUNGEN, VERFAHREN ZUR VERWALTUNG VON IDENTIFIKATORÄNDERUNGEN UND PROGRAMM ZUR VERWALTUNG VON IDENTIFIKATORÄNDERUNGEN
DISPOSITIF DE GESTION DE CHANGEMENT D'IDENTIFIANT, PROCÉDÉ DE GESTION DE CHANGEMENT D'IDENTIFIANT ET PROGRAMME DE GESTION DE CHANGEMENT D'IDENTIFIANT

(43) Date of publication of application: 16.08.2023
(73) Proprietor: NTT, Inc., Tokyo 100-8116 (JP)
(72) Inventor: FUJIMURA, Shigeru, Musashino-shi, Tokyo 180-8585 (JP); OHASHI, Shigenori, Musashino-shi, Tokyo 180-8585 (JP); NAKADAIRA, Atsushi, Musashino-shi, Tokyo 180-8585 (JP)
(74) Representative: Gramm, Lins & Partner Patent- und Rechtsanwälte PartGmbB
(86) International application number: PCT/JP2020/038038
(87) International publication number: WO 2022/074772

(56) References cited:
- WO-A1-2020/006425
- CN-A- 108 830 577
- JP-A- 2012 512 617
- JP-A- 2012 516 654
- US-A1- 2015 324 789
- US-A1- 2019 295 069
- PEDROSA MICAEL ET AL: "RAIAP: renewable authentication on isolated anonymous profiles", PEER-TO-PEER NETWORKING AND APPLICATIONS, SPRINGER, US, vol. 13, no. 5, 30 April 2020 (2020-04-30), pages 1577 - 1599, XP037227411, ISSN: 1936-6442, [retrieved on 20200430], DOI: 10.1007/S12083-020-00914-5
- SAMUEL M. SMITH: "Key Event Receipt Infrastructure (KERI)", ARXIV.ORG CORNELL UNIVERSITY LIBRARY, 201 OLIN LIBRARY CORNELL UNIVERSITY ITHACA, NY 14853, 3 July 2019 (2019-07-03), XP081732999

## Description

### Technical Field

The present invention relates to an identifier change management apparatus, an identifier change management method, and an identifier change management program.

### Background Art

In transactions of cryptocurrency represented by bitcoin (registered trademark), blockchains are used as a type of decentralized distributed ledger technology. In the distributed ledger technology, each user terminal participating in the network holds the same distributed ledger.

There is a method that requires cooperation of a trusted third party when an identifier (address) on a distributed ledger is changed. As an example of a method of using a trusted third party, a condition for an identifier change is set such that two signatures among three pre-registered signatures are collected, and a user terminal manages two keys for the signature and a trusted third party manages remaining one key. As a result, even when one of the keys managed by the user terminal is leaked or lost, the condition for the identifier change is satisfied by cooperating with the trusted third party, a signature to be newly used is registered, and the condition for the next identifier change can be changed. As a method for achieving such a management form, there is a method called multi-signature (see, for example, Patent Literature 1).

Smith S. M.: "Key Event Receipt Infrastructure (KERI) Design", https:// arxiv.org/abs/1907.02143v10, 05.08.2020 discloses key rolling with pre-commitment of the successor key, but keep the identifier invariant.

Pedrosa M. et al: "RAIAP: renewable authentication on isolated anonymous profiles", PEER-TO-PEER NETWORKING AND APPLICATIONS, Springer, vol. 13, no. 5, 30 .April 2020 (2020-04-30),pages 1577-1599, XP03722741 1 , DOI: 10.1007/812083-020-00914-5 discloses renewable authentication on isolated anonymous profiles.

WO 2020/006425 A1 discloses a wallet recovery method.

### Citation List

### Patent Literature

Patent Literature 1: JP 6628188 B2

### Summary of Invention

### Technical Problem

When a trusted third party betrays or a user terminal leaks or loses two keys due to negligence, the user terminal cannot change an identifier. In addition, the largest feature of the distributed ledger is the distribution of the authority. Therefore, when a trusted third party is set in the system of the distributed ledger system, there is a person having privilege in some functional capabilities, and the largest feature of the distributed ledger is lost.

The present invention has been made in view of the above circumstances, and an object of the present invention is to provide an identifier change management apparatus, an identifier change management method, and an identifier change management program capable of changing an identifier without requiring a trusted third party.

### Solution to Problem

In order to achieve the above object, an identifier change management apparatus connectable to a distributed ledger network of the present invention according to claim 1 is proposed.

### Advantageous Effects of Invention

According to an aspect of the present invention, it is possible to provide an identifier change management apparatus, an identifier change management method, and an identifier change management program capable of changing an identifier without requiring a trusted third party.

### Brief Description of Drawings

Fig. 1 is a diagram illustrating an overall configuration of a distributed ledger system including a user terminal that operates as an identifier change management apparatus and a distributed ledger network in an embodiment.
Fig. 2 is a block diagram illustrating an example of a hardware configuration of a user terminal.
Fig. 3 is a diagram illustrating an overall processing flow in a user terminal.
Fig. 4 is a diagram illustrating a data structure of an identifier change transaction.
Fig. 5 is a flowchart for explaining step S109 illustrated in Fig. 3.

### Description of Embodiments

Hereinafter, embodiments according to the present invention will be described with reference to the drawings.

### [Configuration]

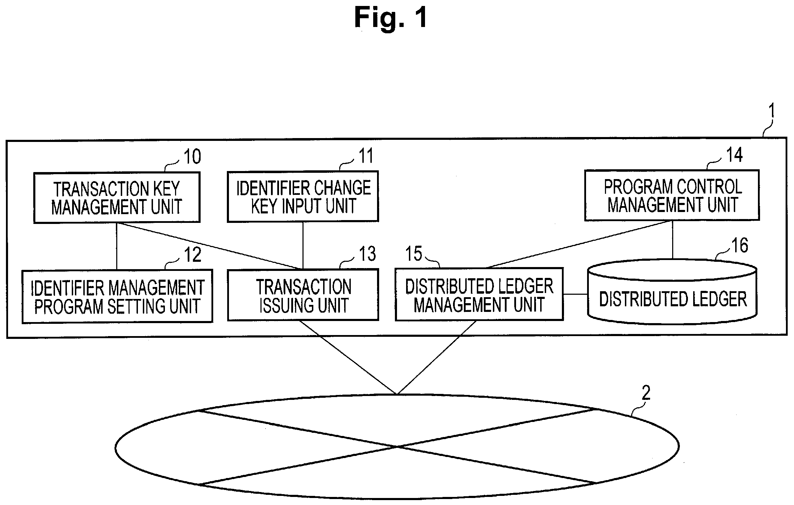

Fig. 1 is a diagram illustrating an overall configuration of a distributed ledger system including a user terminal 1 that operates as an identifier change management apparatus and a distributed ledger network 2 in the present embodiment. The distributed ledger system illustrated in Fig. 1 includes the user terminal 1 and the distributed ledger network 2.

The user terminal 1 is connected to the distributed ledger network 2 which is a peer-to-peer (P2P) network in an autonomously distributed manner. In addition to the user terminal 1 illustrated in Fig. 1, a plurality of user terminals are connected to the distributed ledger network 2. For example, a plurality of user terminals 1 may be connected.

The user terminal 1 includes a transaction key management unit 10, an identifier change key input unit 11, an identifier management program setting unit 12, a transaction issuing unit 13, a program control management unit 14, a distributed ledger management unit 15, and a distributed ledger 16. The user terminal 1 is, for example, a node that uses the distributed ledger network 2. The node has a functional capability of performing transaction verification processing and updating and holding ledger information.

The transaction key management unit 10 manages a secret key for transaction issuance. The secret key for issuing the transaction is also a secret key for using various functional capabilities on the distributed ledger 16. Various functional capabilities may be any functional capabilities as long as the functional capabilities are information stored in the distributed ledger 16 and the ownership can be transmitted and received between the user terminals 1. For example, the various functional capabilities may be functions such as transactions of cryptocurrency.

The identifier change key input unit 11 is an input unit that receives an input of a secret key for the identifier change securely held by the user terminal 1 in the identifier change. Here, the identifier is an identifier that forms a pair with the secret key managed by the transaction key management unit 10 and is generated from the public key held in the distributed ledger 16. That is, the identifier change means changing the corresponding secret key and public key. The secret key for the identifier change is managed in a storage place different from the user terminal 1 such as paper or a dedicated device. That is, the secret key for the identifier change may be held by a general method that can be securely held by the user. For example, the secret key for the identifier change is managed as a QR code (registered trademark) printed on paper outside the user terminal 1. The secret key managed externally may be used once or may be prepared a plurality of times.

The identifier management program setting unit 12 sets various conditions in the identifier management program to be registered or registered in the distributed ledger 16. In the identifier management program, a condition for checking that the transaction has been properly issued from the user terminal 1 at the time of normal use is set by the identifier management program setting unit 12. The condition in the present embodiment is successful verification of the electronic signature included in various transactions issued from the user terminal 1. Therefore, the identifier management program holds a public key Pₙ₋₁ paired with a secret key sₙ₋₁ used during normal use held by the transaction key management unit 10. s represents a secret key, P represents a public key, and n represents any positive integer. The identifier management program calculates an available identifier from the public key Pₙ₋₁. The available identifier corresponds to a so-called address or account used by the user terminal 1. A method of calculating the available identifier is assumed to be a general method of acquiring from the public key, and a detailed description thereof will be omitted here.

In the identifier management program, an identifier change condition is set by the identifier management program setting unit 12. The identifier change condition in the present embodiment is set when a signature value σₙ of the electronic signature included in the transaction is verifiable using the public key Pₙ used in the next identifier change. Here, σ represents a signature value. Therefore, the identifier management program holds the public key Pₙ used in the next identifier change. The identifier management program has a function that provides a functional capability for various conditions when the conditions are satisfied.

The transaction issuing unit 13 issues a transaction to the distributed ledger network 2 by using the secret key managed by the transaction key management unit 10. For example, the transaction issuing unit 13 issues a transaction including a transaction of cryptocurrency or the like. In the present embodiment, the transaction issuing unit 13 also issues a transaction for registering the identifier management program set by the identifier management program setting unit 12 on the distributed ledger 16 and a transaction for changing the identifier on the distributed ledger 16. A transaction for changing the identifier on the distributed ledger 16 will be described later.

The program control management unit 14 controls and manages programs such as an identifier management program stored on the distributed ledger 16. In the present embodiment, the program control management unit 14 rewrites the identifier management program in response to the identifier change request from the user terminal 1. Therefore, the program control management unit 14 controls this rewriting and manages the identifier management program.

The distributed ledger management unit 15 maintains the distributed ledger network 2 in cooperation with other user terminals connected to the distributed ledger network 2 in an autonomously distributed manner. The distributed ledger management unit 15 causes the program control management unit 14 to check whether the issued transaction has been properly issued from the user terminal 1 using the identifier management program stored in the distributed ledger 16. For example, the program control management unit 14 verifies a signature value σₙ₋₁ of the electronic signature added to the transaction by using a public key Pₙ₋₁. When the signature verification procedure is successful, the program control management unit 14 determines that the transaction has been properly issued from the user terminal 1. The signature verification may be performed by a general method using the public key Pₙ₋₁, and detailed description thereof will be omitted here.

When receiving the transaction issued to the distributed ledger network 2, the distributed ledger management unit 15 causes the program control management unit 14 to execute a program for performing verification/approval procedure of the received transaction. For example, in the case of using a blockchain, the program control management unit 14 generates one block by collecting transactions issued on the distributed ledger network 2 within a predetermined time, and performs mining of the block. The program control management unit 14 adds the block that has been verified successfully to the blockchain stored in the distributed ledger 16. The technology for maintaining the distributed ledger network 2 is not limited to the blockchain, and may be any technology for maintaining the distributed ledger network 2, such as a directed acyclic graph (DAG). As a method of approving the new block, for example, a method other than mining, such as using a distributed consensus algorithm, may be used.

The distributed ledger 16 is synchronized with the distributed ledgers 16 of all the user terminals 1 connected to the distributed ledger network 2 via the distributed ledger management unit 15, thereby storing transactions for which verification has been successful. For example, in a case where a blockchain is used, the distributed ledger 16 stores a blockchain and a data set managed by the blockchain.

The distributed ledger network 2 is a network using a decentralized distributed ledger technology, which requires no specific administrator. The distributed ledger network 2 may be any of an open type, a private type, and a consortium type. However, the distributed ledger network 2 can be managed by the distributed ledger 16, and is assumed to be a network that does not include processing registered posteriori by a specific administrator in the process of transaction verification, execution, and registration in the distributed ledger 16.

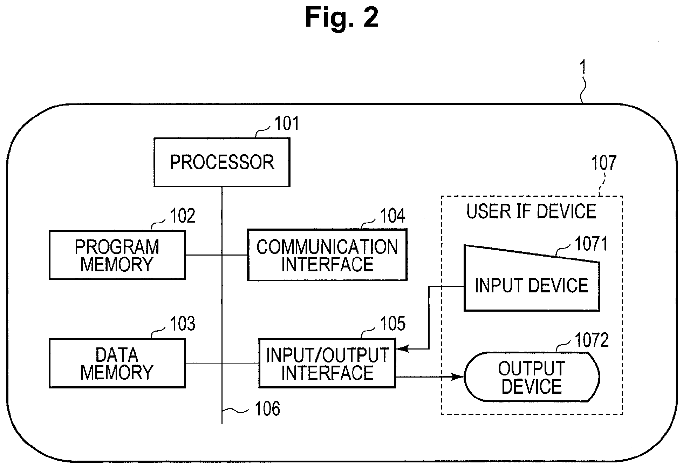

Fig. 2 is a block diagram illustrating an example of a hardware configuration of the user terminal 1.

The user terminal 1 includes, for example, a hardware processor 101 such as a central processing unit (CPU) or a micro processing unit (MPU). In addition, a program memory 102, a data memory 103, a communication interface 104, and an input/output interface 105 are connected to the processor 101 via a bus 106.

The program memory 102 can use, as a storage medium, a combination of a nonvolatile memory to and from which writing and reading can be performed at any time, such as an erasable programmable read only memory (EPROM) or a memory card, and a nonvolatile memory such as a read only memory (ROM), for example. The program memory 102 stores a program necessary for the processor 101 to execute various types of control processing according to an embodiment. That is, any processing functional capability unit in each unit of a functional configuration described above can be implemented by the above-described processor 101 reading and executing a program stored in the program memory 102.

The data memory 103 is a storage using, as a storage medium, a combination of a nonvolatile memory to and from which writing and reading can be performed at any time, such as a memory card, and a volatile memory such as a random access memory (RAM), for example. The data memory 103 is used to store data acquired and created in the process in which the processor 101 executes a program to perform various types of processing. That is, in the data memory 103, an area for storing various types of data is appropriately secured in the process of performing the various types of processing. The distributed ledger 16 includes the program memory 102 and the data memory 103. That is, a program such as an identifier management program stored on the distributed ledger 16 is stored in the program memory 102, and data such as a blockchain is stored in the data memory 103.

The communication interface 104 includes one or more wireless communication modules. For example, the communication interface 104 includes a wireless communication module using a short-range wireless technology such as Bluetooth (registered trademark). Furthermore, the communication interface 104 includes, for example, a wireless communication module wirelessly connected to a Wi-Fi access point or a mobile phone base station. The wireless communication module is connected to the distributed ledger network 2 via a Wi-Fi access point or a mobile phone base station under the control of the processor 101, and can communicate with other user terminals to transmit and receive various types of information. Note that the communication interface 104 may include one or more wired communication modules.

The input/output interface 105 is an interface with a user interface device 107. Note that, in Fig. 2, the "user interface device" is described as "USER IF DEVICE".

The user interface device 107 includes an input device 1071 and an output device 1072. The output device 1072 is a display device using, for example, liquid crystal, organic electro luminescence (EL), or the like, and displays an image according to a signal input from the input/output interface 105. The input device 1071 is an input detection sheet that is disposed on a display screen of the display device as the output device 1072 and employs an electrostatic method or a pressure method, and outputs a touch position of the user to the processor 101 via the input/output interface 105. The input device 1071 and the output device 1072 may be configured by independent devices. The input/output interface 105 can input the operation information input in the input device 1071 to the processor 101 and cause the output device 1072 to display the display information generated by the processor 101.

### [Operation]

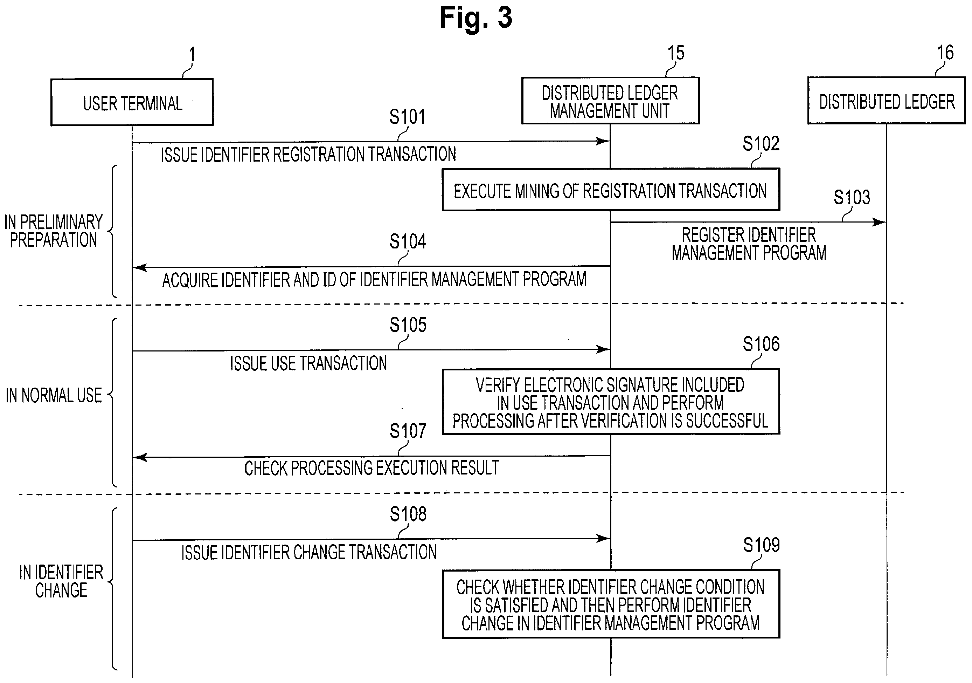

Fig. 3 is a diagram illustrating an overall processing flow in the user terminal 1.

The distributed ledger management unit 15 (and the program control management unit 14) and the distributed ledger 16 illustrated in Fig. 3 indicate the distributed ledger management unit 15 (and the program control management unit 14) and the distributed ledger 16 of all the user terminals 1 in the distributed ledger system. That is, the distributed ledger management unit 15 (and the program control management unit 14) and the distributed ledger 16 illustrated in Fig. 3 may be the distributed ledger management unit 15 (and the program control management unit 14) and the distributed ledger 16 of the user terminal 1 illustrated in Fig. 1, or may be the distributed ledger management unit 15 (and the program control management unit 14) and the distributed ledger 16 of another user terminal 1. The processor 101 of the user terminal 1 reads and executes each program stored in the program memory 102, thereby implementing the operation of this flowchart.

Here, steps S101 to S104 indicate steps for preliminary preparation for using the identifier management program in the present embodiment, steps S105 to S107 indicate steps in normal use using the identifier management program, and steps S108 to S109 indicate steps in changing the identifier stored in the distributed ledger 16.

In the preliminary preparation, the transaction issuing unit 13 of the user terminal 1 issues an identifier registration transaction for registering the identifier management program in the distributed ledger 16 on the distributed ledger network 2 (step S101). In the identifier management program, a condition for confirming that the use transaction has been properly issued from the user terminal 1 at the time of normal use, an identifier change condition, and the like are set by the identifier management program setting unit 12.

The distributed ledger management unit 15 causes the program control management unit 14 to execute mining of the registration transaction (step S102). For example, in the case of using a blockchain, mining is performed on a block obtained by collecting a plurality of transactions including registration transactions received during a predetermined time interval.

The distributed ledger management unit 15 causes the program control management unit 14 to register the identifier management program in the distributed ledger 16 according to the identifier registration transaction that has succeeded in mining (step S103). When registering the identifier registration program in the distributed ledger 16, the distributed ledger management unit 15 acquires an ID indicating a storage location of the identifier registration program.

The user terminal 1 acquires the ID of the identifier management program from the distributed ledger management unit 15 (step S104). The user terminal 1 may also acquire an identifier calculated by the public key Pₙ₋₁ held by the identifier management program.

During normal use, the transaction issuing unit 13 of the user terminal 1 issues a use transaction including a request for using the information stored in the distributed ledger 16 (step S105). The use transaction includes, for example, an ID of an identifier management program, an available identifier, an instruction on a transaction of the cryptocurrency, and an electronic signature generated by the secret key sₙ₋₁ managed by the transaction key management unit 10. The request for using the information stored in the distributed ledger 16 is not limited to the transaction of the cryptocurrency, and may be any request as long as the request is information stored in the distributed ledger 16 and the ownership can be transmitted and received between the user terminals 1.

The distributed ledger management unit 15 verifies the electronic signature included in the use transaction, and performs processing according to the request included in the use transaction after verification succeeds (step S106). That is, the distributed ledger management unit 15 passes the ID of the identifier management program included in the use transaction to the program control management unit 14, and the program control management unit 14 executes the identifier management program indicated by the ID. The program control management unit 14 verifies the use transaction by the identifier management program. For example, the program control management unit 14 performs signature verification using the public key Pₙ₋₁ held by the identifier management program for the signature value σₙ₋₁ of the electronic signature included in the use transaction. When the signature verification is successful, the program control management unit 14 determines that the verification is successful considering that the use transaction has been properly issued from the user terminal 1. That is, it is proved that the electronic signature is made by the user. When the verification is successful, the distributed ledger management unit 15 causes the program control management unit 14 to perform processing of an arbitrary program according to the use identifier and the request included in the use transaction. When the program control management unit 14 determines that the use transaction has not been properly issued from the user terminal 1, the distributed ledger management unit 15 discards the use transaction. The distributed ledger management unit 15 may report the possibility of trial of unauthorized use to the user terminal 1.

The distributed ledger management unit 15 transmits processing execution result check information including the execution result to the user terminal 1 (step S107). Upon receiving the information, the user terminal 1 may display the execution result to the user via the output device 1072 of the user terminal 1.

In the identifier change, the user terminal 1 issues an identifier change transaction including an identifier change request on the distributed ledger network 2 (step S108). When the user terminal 1 leaks or loses the secret key sₙ₋₁ due to negligence or the like, another terminal can acquire the leaked or lost secret key sₙ₋₁. The other terminal that has acquired the leaked or lost secret key sₙ₋₁ can issue a transaction using the secret key sₙ₋₁ to impersonate the user terminal 1. Therefore, the user terminal 1 needs to change the identifier registered on the distributed ledger 16. In this case, the user terminal 1 acquires the secret key sₙ for the identifier change and the secret key sₙ₊₁ used for the next identifier change condition setting, which are securely held separately from the user terminal 1, by reading the QR code printed on paper or the like by the identifier change key input unit 11. The user terminal 1 generates the public key Pₙ₊₁ used for the next identifier change from the acquired secret key sₙ₊₁. The user terminal 1 discards the secret key sₙ₊₁ from the inside of the user terminal 1 and securely stores the secret key sₙ₊₁ again. Then, the user terminal 1 issues the identifier change transaction by the transaction issuing unit 13 by using the acquired secret key sₙ.

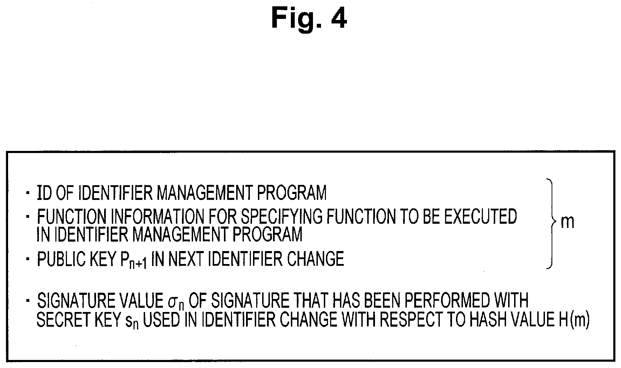

Fig. 4 is a diagram illustrating a data structure of an identifier change transaction.

As illustrated in Fig. 4, the identifier change transaction includes three elements of an identifier management program ID, function information specifying a function to be executed by the identifier management program, and a public key Pₙ₊₁ to be used for the next identifier change. Here, the function information is assumed to be information specifying a function that causes the identifier management program to execute a functional capability of changing the identifier. The identifier change transaction includes a signature value σₙ of the electronic signature on a hash value H(m) of a message m when the three elements are the message m, with the secret key sₙ used in an identifier change.

The distributed ledger management unit 15 confirms that the identifier change condition is satisfied and causes the program control management unit 14 to change the identifier (step S109). That is, when receiving the identifier change transaction, the distributed ledger management unit 15 reads the identifier management program ID included in the identifier change transaction and passes the identifier management program ID to the program control management unit 14. The program control management unit 14 reads and executes the identifier management program indicated by the ID, and checks whether the identifier change condition is satisfied. That is, the program control management unit 14 determines whether the signature value σₙ of the electronic signature included in the transaction is verifiable with using the public key Pₙ used when the identifier is changed. As a result of the determination, when it is verifiable, that is satisfies the identifier change condition, the program control management unit 14 changes the next identifier change condition in the identifier management program, causes the identifier management program to hold the identifier change condition, and changes the public key used to calculate the currently available identifier from the public key Pₙ₋₁ to the public key Pₙ. When the identifier change condition is not satisfied, it is determined that the identifier change transaction is not properly issued from the user terminal 1, and the distributed ledger management unit 15 discards the identifier change transaction. The distributed ledger management unit 15 may report to the user terminal 1 that an unauthorized identifier change request has been made.

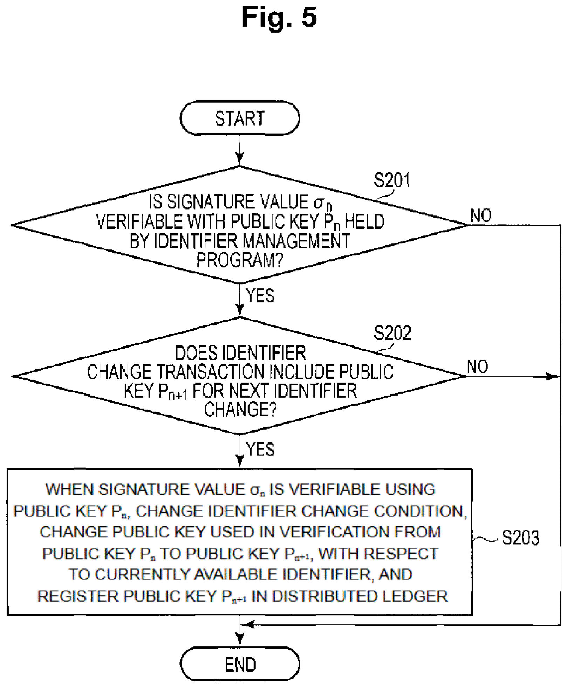

Fig. 5 is a flowchart for explaining step S109 illustrated in Fig. 3.

The program control management unit 14 determines whether the signature value σₙ included in the identifier change transaction is verifiable with the public key Pₙ held by the identifier management program (step S201). The identifier management program holds the public key Pₙ used after an identifier change. Therefore, it is possible to verify the signature value σₙ with the public key Pₙ. When the signature verification is successful, it is proved that the user terminal 1 that has issued the identifier change request has been properly issued the identifier change transaction, and it is proved that the user has the secret key sₙ. It is also proved that the range of the message m is data created by the user having the secret key sₙ. When the program control management unit 14 determines that two values do not match each other, the distributed ledger management unit 15 determines that the identifier change transaction has not properly issued from the user terminal 1, and discards the identifier change transaction.

When the signature value σₙ is verifiable with the public key Pₙ, the program control management unit 14 determines whether the identifier change transaction includes the public key Pₙ₊₁ for the next identifier change (step S202). The message m needs to include the public key Pₙ₊₁ paired with the secret key sₙ₊₁ used in the next identifier change. As a result, the public key Pₙ for the identifier change is used only once for the identifier change. This means that Pₙ₊₁ different from the public key Pₙ needs to be used for the next identifier change. This is to prevent a retransmission attack. The identifier change transaction is recorded in the distributed ledger 16. Therefore, the identifier change transaction is widely disclosed to other user terminals. If the public key for the identifier change is fixed without including the public key to be used next time or later in the identifier change transaction, a widely disclosed public key is stored, so that it is possible to perform a retransmission attack of retransmitting a change request having the same content. In order to eliminate this risk, it is necessary to use the public key for the identifier change only once and always specify the next public key. When the program control management unit 14 determines that the public key Pₙ₊₁ used in the next identifier change is not included in the identifier change transaction, the distributed ledger management unit 15 discards the identifier change transaction. In this case, the distributed ledger management unit 15 may transmit, to the user terminal 1, information notifying that the identifier change transaction has been discarded and that it is necessary to include the public key Pₙ₊₁ for the next identifier change in the identifier change transaction.

When the identifier change transaction includes the public key Pₙ₊₁, the program control management unit 14 changes the identifier change condition in the identifier management program, changes the public key in the normal use from the public key Pₙ₋₁ to the public key Pₙ, and causes the identifier management program to hold the public key Pₙ (step S203). That is, the identifier calculated using the public key Pₙ is registered in the distributed ledger 16 as the currently available identifier. Specifically, the identifier change condition is changed when it is determined that a signature value σₙ₊₁ of the electronic signature included in the transaction is verifiable using the public key Pₙ₊₁. The identifier management program holds the public key Pₙ₊₁ as data related to the next identifier change.

### [Operation and effect]

According to the above embodiment, the user terminal 1 can change the identifier without requiring a third party. As a result, the distribution of the authority, which is the largest feature of the distributed ledger 16, is not lost, and it is possible to prevent key leakage due to intention or negligence by a third party.

### [Other embodiments]

Note that the present invention is not limited to the above-described embodiment. For example, in the above embodiment, it has been described that the user terminal 1 functions as a node. However, when another user terminal functions as a node, the user terminal 1 may not function as a node. In this case, the user terminal 1 may not include the program control management unit 14, the distributed ledger management unit 15, and the distributed ledger 16.

Furthermore, the methods described in the above-described embodiments can be stored in a recording medium such as a magnetic disk (floppy (registered trademark) disk, hard disk, or the like), an optical disk (CD-ROM, DVD, MO, or the like), or a semiconductor memory (ROM, RAM, flash memory, or the like) as programs (software means) that can be executed by a computing machine (computer), or can also be distributed by being transmitted through a communication medium. Note that the programs stored on the medium side also include a setting program for configuring, in the computing machine, a software means (not only an execution program but also tables and data structures are included) to be executed by the computing machine. The computing machine that implements the present apparatus executes the above-described processing by reading the programs recorded in the recording medium, constructing the software means by the setting program as needed, and controlling the operation by the software means. Note that the recording medium described in the present specification is not limited to a recording medium for distribution, but includes a storage medium such as a magnetic disk or a semiconductor memory provided in the computing machine or in a apparatus connected via a network.

In short, the present invention is not limited to the above-described embodiments, and various modifications can be made in the implementation stage. In addition, the embodiments may be implemented in appropriate combination if possible, and in this case, combined effects can be obtained.

### Reference Signs List

- 1: User terminal
- 2: Distributed ledger network
- 10: Transaction key management unit
- 11: Identifier change key input unit
- 12: Identifier management program setting unit
- 13: Transaction issuing unit
- 14: Program control management unit
- 15: Distributed ledger management unit
- 16: Distributed ledger
- 101: Processor
- 102: Program memory
- 103: Data memory
- 104: Communication interface
- 105: Input/output interface
- 106: Bus
- 107: User interface device
- 1071: Input device
- 1072: Output device

## Claims

1. An identifier change management apparatus connectable to a distributed ledger network (2), the identifier change management apparatus comprising:
a distributed ledger (16) in which an identifier change program holding a public key (Pₙ) used in an identifier change is registered and configured to manage an identifier which is a cryptographic address derived from the public key (Pₙ);
a distributed ledger management unit (15) that manages the distributed ledger (16);
an identifier change key input unit (11) that receives a secret key (sₙ) corresponding to the public key (Pₙ) in an asymmetric key pair used in the identifier change;
a transaction issuing unit (12) that issues an identifier change transaction including a signature value (σₙ) of an electronic signature that has been performed using the secret key (sₙ); and
a program control management unit (14) that changes the identifier when the distributed ledger management unit (15) receives the identifier change transaction, by the identifier change program, on condition that the signature value (σₙ) included in the identifier change transaction is verifiable by using the public key (Pₙ),
wherein the identifier change program includes a first public key (Pₙ) that is the public key used in the identifier change, and a second public key (Pₙ₋₁) used to calculate a currently available identifier,
the secret key (sₙ) used in the identifier change is a first secret key paired with the first public key, and
the program control management unit (14) verifies the signature value (σₙ) included in the identifier change transaction by using the first public key, and changes the second public key used to calculate the currently available identifier to the first public key when it is determined that the identifier change transaction has been properly issued as a result of the verification, and
wherein the identifier change key input unit (11) further acquires a third secret key different from the first secret key and used for next identifier change, the identifier change transaction includes a third public key (Pₙ₊₁) generated using the third secret key, and the program control management unit (14) sets the third public key as the first public key used in a next identifier change when it is determined that the electronic signature has been properly issued.

2. The identifier change management apparatus according to claim 1,
wherein the identifier change transaction further includes an ID of an identifier change program for identifying the identifier change program from the distributed ledger (16), and function information for specifying a function to be executed by an identifier management program, and
the signature value is a signature value (σₙ) of an electronic signature that has been performed with the first secret key on a hash value of a message including an ID of the identifier change program, the function information, and the third public key.

3. The identifier change management apparatus according to any one of claims 1 to 2, wherein the first public key is used only once to change the identifier, and is managed in a storage place different from the identifier change management apparatus.

4. An identifier change management method performed by an identifier change management apparatus connectable to a distributed ledger network (2), the identifier change management method comprising:
registering in a distributed ledger (2) an identifier change program holding a public key (P) used in an identifier change;
managing an identifier which is a cryptographic address derived from the public key (P);
managing the distributed ledger (16);
receiving a secret key (s) corresponding to the public key (P) in an asymmetric key pair used in the identifier change;
issuing an identifier change transaction including a signature value (σₙ) of an electronic signature that has been performed using the secret key (s); and
changing the identifier when receiving the identifier change transaction, by the identifier change program, on condition that the signature value (σₙ) included in the identifier change transaction is verifiable by using the public key (P),
wherein the identifier change program includes a first public key that is the public key used in the identifier change, and a second public key used to calculate a currently available identifier,
the secret key used in the identifier change is a first secret key paired with the first public key, and verifying, by the program control management unit (14),
the signature value (σₙ) included in the identifier change transaction by using the first public key, and changing the second public key used to calculate the currently available identifier to the first public key when it is determined that the identifier change transaction has been properly issued as a result of the verification, and
acquiring, by the identifier change key input unit (11),
a third secret key different from the first secret key and used for next identifier change, wherein the identifier change transaction includes a third public key generated using the third secret key, and
setting, by the program control management unit (14), the third public key as the first public key used in a next identifier change when it is determined that the electronic signature has been properly issued.

5. An identifier change management program causing a processor to function as each of the units of the identifier change management apparatus according to any one of claims 1 to 3.

## Patentansprüche

1. Eine Vorrichtung zur Verwaltung von Identifikationsänderungen, die an ein Distributed-Ledger-Netzwerk (2) anschließbar ist, wobei die Vorrichtung zur Verwaltung von Identifikationsänderungen umfasst:
ein Distributed-Ledger (16), in dem ein Identifikationsänderungsprogramm registriert ist, das einen bei einer Identifikationsänderung verwendeten öffentlichen Schlüssel (Pₙ) enthält, und das so konfiguriert ist, dass es eine Identifikation verwaltet, bei dem es sich um eine aus dem öffentlichen Schlüssel (Pₙ) abgeleitete kryptografische Adresse handelt;
eine Distributed-Ledger-Verwaltungseinheit (15), die das Distributed-Ledger (16) verwaltet;
eine Schlüssel-Eingabeeinheit (11) für die Identifikationsänderung, die einen geheimen Schlüssel (sₙ) empfängt, der dem öffentlichen Schlüssel (Pₙ) in einem asymmetrischen Schlüsselpaar entspricht, das bei der Identifikationsänderung verwendet wird;
eine Transaktionsausgabeeinheit (12), die eine Identifikationsänderungstransaktion ausgibt, die einen Signaturwert (σₙ) einer elektronischen Signatur enthält, die unter Verwendung des geheimen Schlüssels (sₙ) erstellt wurde; und
eine Programmsteuerungs-Verwaltungseinheit (14), die die Identifikation ändert, wenn die Distributed-Ledger-Verwaltungseinheit (15) die Identifikationsänderungstransaktion empfängt, und zwar mittels des Identifikationsänderungsprogramm unter der Bedingung, dass der in der Identifikationsänderungstransaktion enthaltene Signaturwert (σₙ) unter Verwendung des öffentlichen Schlüssels (Pₙ) überprüfbar ist,
wobei das Identifikationsänderungsprogramm einen ersten öffentlichen Schlüssel (Pₙ) enthält, der der bei der Identifikationsänderung verwendete öffentliche Schlüssel ist, sowie einen zweiten öffentlichen Schlüssel (Pₙ₋₁),der zur Berechnung einer aktuell verfügbaren Identifikation verwendet wird,
der bei der Identifikationsänderung verwendete geheime Schlüssel (sₙ) ist ein erster geheimer Schlüssel, der mit dem ersten öffentlichen Schlüssel gepaart ist, und
die Programmsteuerungs-Verwaltungseinheit (14) den in der Identifikationsänderung enthaltenen Signaturwert (σₙ) unter Verwendung des ersten öffentlichen Schlüssels verifiziert und den zweiten öffentlichen Schlüssel, der zur Berechnung der aktuell verfügbaren Identifikation verwendet wird, in den ersten öffentlichen Schlüssel ändert, wenn als Ergebnis der Verifizierung festgestellt wird, dass die Identifikationsänderungstransaktion ordnungsgemäß ausgestellt wurde, und
wobei die Schlüssel-Eingabeeinheit (11) für die Identifikationsänderung ferner einen dritten geheimen Schlüssel erfasst, der sich vom ersten geheimen Schlüssel unterscheidet und für die nächste Identifikationsänderung verwendet wird; die Identifikationsänderungstransaktion einen dritten öffentlichen Schlüssel (Pₙ₊₁) enthält, der unter Verwendung des dritten geheimen Schlüssels generiert wurde, und die Programmsteuerungs-Verwaltungseinheit (14) den dritten öffentlichen Schlüssel als den ersten öffentlichen Schlüssel festlegt, der bei einer nächsten Identifikationsänderung verwendet wird, wenn festgestellt wird, dass die elektronische Signatur ordnungsgemäß ausgestellt wurde.

2. Vorrichtung zur Verwaltung von Identifikationsänderungen nach Anspruch 1,
wobei die Identifikationsänderungstransaktion ferner eine ID eines Identifikationsänderungsprogramm zur Identifizierung des Identifikationsänderungsprogramm aus dem Distributed-Ledger (16) sowie Funktionsinformationen zur Festlegung einer von einem Identifikationsverwaltungsprogramm auszuführenden Funktion umfasst, und
der Signaturwert ein Signaturwert (σₙ) einer elektronischen Signatur ist, die mit dem ersten geheimen Schlüssel auf einen Hashwert einer Nachricht angewendet wurde, die eine ID des Identifikationsänderungsprogramms, die Funktionsinformationen und den dritten öffentlichen Schlüssel enthält.

3. Vorrichtung zur Verwaltung von Identifikationsänderungen gemäß einem der Ansprüche 1 bis 2, wobei der erste öffentliche Schlüssel nur einmal zur Änderung der Identifikation verwendet wird und an einem anderen Speicherort als der Vorrichtung zur Verwaltung von Identifikationsänderungen verwaltet wird.

4. Verfahren zur Verwaltung von Identifikationsänderungen, das von einer mit einem Distributed-Ledger-Netzwerk (2) verbindbaren Vorrichtung zur Verwaltung von Identifikationsänderungen durchgeführt wird, wobei das Verfahren zur Verwaltung von Identifikationsänderungen umfasst:
das Registrieren eines Identifikationsänderungsprogramm, das einen bei einer Identifikationsänderung verwendeten öffentlichen Schlüssel (P) enthält, in einem Distributed-Ledger (2);
Verwalten einer Identifikation, bei der es sich um eine aus dem öffentlichen Schlüssel (P) abgeleitete kryptografische Adresse handelt;
Verwalten des Distributed-Ledger (16);
Empfangen eines geheimen Schlüssels (s), der dem öffentlichen Schlüssel (P) in einem asymmetrischen Schlüsselpaar entspricht, das bei der Identifikationsänderung verwendet wird;
Ausgeben einer Identifikationsänderungstransaktion, die einen Signaturwert (σₙ) einer elektronischen Signatur enthält, die unter Verwendung des geheimen Schlüssels (s) erstellt wurde; und
Ändern der Identifikation beim Empfang der Identifikationsänderungstransaktion durch das Identifikationsänderungsprogramm unter der Bedingung, dass der in der Identifikationsänderungstransaktion enthaltene Signaturwert (σₙ) unter Verwendung des öffentlichen Schlüssels (P) überprüfbar ist,
wobei das Identifikationsänderungsprogramm einen ersten öffentlichen Schlüssel, der der bei der Identifikationsänderung verwendete öffentliche Schlüssel ist, und einen zweiten öffentlichen Schlüssel umfasst, der zur Berechnung einer aktuell verfügbaren Identifikation verwendet wird,
wobei der bei der Identifikationsänderung verwendete geheime Schlüssel ein erster geheimer Schlüssel ist, der mit dem ersten öffentlichen Schlüssel gepaart ist, und Verifizieren des in der Identifikationsänderungstransaktion enthaltenen Signaturwerts (σₙ ) durch die Programmsteuerungs- und Verwaltungseinheit (14) unter Verwendung des ersten öffentlichen Schlüssels sowie Ändern des zweiten öffentlichen Schlüssels, der zur Berechnung der aktuell verfügbaren Identifikation verwendet wird, in den ersten öffentlichen Schlüssel, wenn als Ergebnis der Verifizierung festgestellt wird, dass die Identifikationsänderungstransaktion ordnungsgemäß ausgegeben wurde, und
Erfassen eines dritten geheimen Schlüssels, der sich vom ersten geheimen Schlüssel unterscheidet und für die nächste Identifikationsänderung verwendet wird, durch die Schlüssel-Eingabeeinheit (11) für die Identifikationsänderung, wobei die Identifikationsänderungstransaktion einen dritten öffentlichen Schlüssel enthält, der unter Verwendung des dritten geheimen Schlüssels erzeugt wurde, und Festlegen des dritten öffentlichen Schlüssels als den ersten öffentlichen Schlüssel, der bei einer nächsten Identifikationsänderung verwendet wird, durch die Programmsteuerungs-Verwaltungseinheit (14), wenn festgestellt wird, dass die elektronische Signatur ordnungsgemäß ausgestellt wurde.

5. Ein Programm zur Verwaltung von Identifikationsänderungen, das einen Prozessor veranlasst, als jede der Einheiten der Vorrichtung zur Verwaltung von Identifikationsänderungen gemäß einem der Ansprüche 1 bis 3 zu fungieren.

## Revendications

1. Dispositif de gestion du changement d'identifiant, pouvant être connecté à un réseau de registres distribués (2), ledit dispositif de gestion du changement d'identifiant comprenant :
un registre distribué (16) dans lequel est enregistré un programme de changement d'identifiant contenant une clé publique (Pₙ) utilisée lors d'un changement d'identifiant, et configuré pour gérer un identifiant qui est une adresse cryptographique dérivée de la clé publique (Pₙ) ;
une unité de gestion du registre distribué (15) qui gère le registre distribué (16) ;
une unité d'entrée de clé de changement d'identifiant (11) qui reçoit une clé secrète (sₙ) correspondant à la clé publique (Pₙ) au sein d'une paire de clés asymétriques utilisée lors du changement d'identifiant ;
une unité d'émission de transaction (12) qui émet une transaction de changement d'identifiant incluant une valeur de signature (σₙ) d'une signature électronique qui a été effectuée à l'aide de la clé secrète (sₙ) ; et
une unité de gestion de contrôle de programme (14) qui modifie l'identifiant lorsque l'unité de gestion du registre distribué (15) reçoit la transaction de changement d'identifiant, par le biais du programme de changement d'identifiant, à condition que la valeur de signature (σₙ) incluse dans la transaction de changement d'identifiant soit vérifiable à l'aide de la clé publique (Pₙ),
dans lequel
le programme de changement d'identifiant comprend une première clé publique (Pₙ) qui est la clé publique utilisée lors du changement d'identifiant, et une deuxième clé publique (Pₙ₋₁) utilisée pour calculer un identifiant actuellement disponible,
la clé secrète (sₙ) utilisée lors du changement d'identifiant est une première clé secrète appariée à la première clé publique, et
l'unité de gestion de contrôle de programme (14) vérifie la valeur de signature (σₙ) incluse dans la transaction de changement d'identifiant à l'aide de la première clé publique, et modifie la deuxième clé publique, utilisée pour calculer l'identifiant actuellement disponible, pour passer à la première clé publique lorsqu'il est déterminé, à l'issue de la vérification, que la transaction de changement d'identifiant a été correctement émise, et
l'unité d'entrée de clé de changement d'identifiant (11) acquiert en outre une troisième clé secrète, différente de la première clé secrète et utilisée pour le prochain changement d'identifiant,
la transaction de changement d'identifiant comprend une troisième clé publique (Pₙ₊₁) générée à l'aide de la troisième clé secrète, et
l'unité de gestion de contrôle de programme (14) définit la troisième clé publique comme première clé publique utilisée lors d'un prochain changement d'identifiant lorsqu'il est déterminé que la signature électronique a été correctement émise.

2. Dispositif de gestion du changement d'identifiant selon la revendication 1, dans lequel la transaction de changement d'identifiant comprend en outre un identifiant d'un programme de changement d'identifiant permettant d'identifier le programme de changement d'identifiant à partir du registre distribué (16), ainsi que des informations de fonction permettant de spécifier une fonction devant être exécutée par un programme de gestion de l'identifiant, et
la valeur de signature est une valeur de signature (σₙ) d'une signature électronique qui a été effectuée à l'aide de la première clé secrète sur une valeur de hachage d'un message comprenant un identifiant du programme de changement d'identifiant, les informations de fonction et la troisième clé publique.

3. Dispositif de gestion du changement d'identifiant selon l'une des revendications 1 à 2,
dans lequel la première clé publique n'est utilisée qu'une seule fois pour modifier l'identifiant et est gérée dans un emplacement de stockage différent du dispositif de gestion du changement d'identifiant.

4. Procédé de gestion du changement d'identifiant mis en œuvre par un dispositif de gestion du changement d'identifiant pouvant être connecté à un réseau de registres distribués (2), le procédé de gestion du changement d'identifiant comprenant :
l'enregistrement dans un registre distribué (2) d'un programme de changement d'identifiant contenant une clé publique (P) utilisée lors d'un changement d'identifiant ;
la gestion d'un identifiant qui est une adresse cryptographique dérivée de la clé publique (P) ;
la gestion du registre distribué (16) ;
la réception d'une clé secrète (s) correspondant à la clé publique (P) au sein d'une paire de clés asymétriques utilisée lors du changement d'identifiant ;
l'émission d'une transaction de changement d'identifiant comprenant la valeur de signature (σₙ) d'une signature électronique qui a été effectuée à l'aide de la clé secrète (s) ; et
le changement de l'identifiant à la réception de la transaction de changement d'identifiant, par le biais du programme de changement d'identifiant, à condition que la valeur de signature (σₙ) incluse dans la transaction de changement d'identifiant soit vérifiable à l'aide de la clé publique (P),
sachant que le programme de changement d'identifiant comprend une première clé publique qui est la clé publique utilisée lors du changement d'identifiant, et une deuxième clé publique utilisée pour calculer un identifiant actuellement disponible, et que la clé secrète utilisée lors du changement d'identifiant est une première clé secrète appariée à la première clé publique, et
la vérification, par l'unité de gestion de contrôle de programme (14), de la valeur de signature (σₙ) incluse dans la transaction de changement d'identifiant à l'aide de la première clé publique, et
la modification de la deuxième clé publique, utilisée pour calculer l'identifiant actuellement disponible, pour passer à la première clé publique lorsqu'il est déterminé, à l'issue de la vérification, que la transaction de changement d'identifiant a été correctement émise, et
l'acquisition, par l'unité d'entrée de clé de changement d'identifiant (11), d'une troisième clé secrète différente de la première clé secrète et utilisée pour le prochain changement d'identifiant, la transaction de changement d'identifiant comprenant une troisième clé publique générée à l'aide de la troisième clé secrète, et
la définition, par l'unité de gestion de contrôle de programme (14), de la troisième clé publique comme première clé publique utilisée lors d'un prochain changement d'identifiant lorsqu'il est déterminé que la signature électronique a été correctement émise.

5. Programme de gestion du changement d'identifiant amenant un processeur à fonctionner comme chacune des unités du dispositif de gestion du changement d'identifiant selon l'une des revendications 1 à 3.
